# EUROPÄISCHE PATENTSCHRIFT

(11) **EP 3 370 087 B1**
(45) Veröffentlichungstag und Bekanntmachung des Hinweises auf die Patenterteilung: **27.01.2021**
(21) Anmeldenummer: 18157311.4
(22) Anmeldetag: 19.02.2018
(51) Int. Cl.: G01S 19/35, G01S 19/33, H01Q 1/32, G01S 19/42

(54) **ON-BOARD-UNIT FÜR EIN KRAFTFAHRZEUG MIT EINER GNSS-ANTENNE UND EINER GNSS-EMPFANGSVORRICHTUNG ZUR ERMITTLUNG DER POSITION DES KRAFTFAHRZEUGS**
ON-BOARD UNIT FOR A MOTOR VEHICLE WITH A GNSS ANTENNA AND A GNSS RECEIVER FOR DETERMINING THE POSITION OF THE MOTOR VEHICLE
UNITÉ EMBARQUÉE POUR UN VÉHICULE AUTOMOBILE POURVUE D'UNE ANTENNE GNSS ET D'UN DISPOSITIF DE RÉCEPTION GNSS PERMETTANT DE DÉTERMINER LA POSITION DU VÉHICULE AUTOMOBILE

(30) Priorität: 21.02.2017 DE 102017202809; 23.02.2017 DE 102017202991
(43) Veröffentlichungstag der Anmeldung: 05.09.2018
(73) Patentinhaber: Continental Automotive GmbH, 30165 Hannover (DE)
(72) Erfinder: Bartholomäus, Ulf, 78112 St. Georgen (DE)

(56) Entgegenhaltungen:
- EP-A1- 2 466 682
- EP-A2- 2 813 864
- US-A1- 2003 020 657
- US-B1- 7 142 980

## Beschreibung

Die Erfindung betrifft eine On-Board-Unit für ein Kraftfahrzeug mit einer GNSS-Antenne und einer GNSS-Empfangsvorrichtung zur Ermittlung der Position des Kraftfahrzeugs, wobei die Antenne und die Empfangsvorrichtung innerhalb eines Gehäuses der On-Board-Unit angeordnet sind.

Als On-Board-Unit werden elektronische Geräte bezeichnet, die zum Einbau in Kraftfahrzeuge vorgesehen sind. Kraftfahrzeuge können bereits bei Auslieferung mit On-Board-Units ausgerüstet oder später mit On-Board-Units nachgerüstet werden. Der Begriff On-Board-Unit schließt beispielsweise Fahrzeugdatenaufzeichnungsvorrichtungen wie Tachographen (auch als Fahrtschreiber bezeichnet), Mautgeräte (auch als Mauterfassungsgeräte oder Mautrechner bezeichnet) und Taxameter ein.

Mit On-Board-Units für Kraftfahrzeuge werden unter anderem die Aktivitäten von Fahrern und Fahrzeugen im gewerblichen Güter- oder Personenverkehr, wie etwa Lenk- und Ruhezeiten von beispielsweise Lastkraftwagen oder auch das Befahren von mit einer Mautpflicht belegten Straßennetzabschnitten, aufgezeichnet.

On-Board-Units müssen immer höhere technische Anforderungen erfüllen. Es sind beispielsweise Mautrechner mit einem darin angeordneten Empfänger für GPS-Signale bekannt. Dabei steht GPS für den englischen Ausdruck "Global Positioning System", der wiederum eine Kurzform der Bezeichnung NAVSTAR GPS ist. GPS bezeichnet ein Navigationssatellitensystem. Die wörtliche Übersetzung von GPS bedeutet etwa "globales Positionsbestimmungssystem". Die Ermittlung der Position eines Kraftfahrzeugs, beispielsweise eines Lastkraftwagens, mithilfe von einem Navigationssatellitensystem GNSS bietet eine Vielzahl von neuen Anwendungsmöglichkeiten, beispielsweise zur Erfassung von Lenk- und Ruhezeiten, Mauterfassung, Navigation oder Überwachung sicherheitsrelevanter Güter während eines Transports. GNSS steht für den englischen Begriff "Global Navigation Satellite System", der mit "Globales Navigationssatellitensystem" übersetzt werden kann. GPS ist ein GNSS und es gibt darüber hinaus weitere GNS-Systeme, beispielsweise GLONASS, Galileo und Beidou, wobei Letzteres sich derzeit noch im Aufbau befindet und noch keine globale Abdeckung liefert.

Nachteilig am bisher bekannten Stand der Technik ist jedoch, dass insbesondere aufgrund von ungünstigen Empfangseigenschaften On-Board-Units oftmals zumindest zeitweise keine Positionsermittlung ausführen können oder Positionsermittlungen nicht beständig oder zuverlässig möglich sind. Derartige Schwierigkeiten treten insbesondere auf, wenn sich eine On-Board-Unit in einer hindernisbewährten Landschaft befindet oder Einbaubedingungen in einem Fahrzeug ungünstige oder abschattend sind.

Aus EP 2 466 682 A1 ist ein Bordinformationssystem mit Antenne zum Empfang satellitenbasierter Geopositionsdaten bekannt, wobei das Bordinformationssystem ein Tachograph und/oder ein Mauterfassungsgerät sein kann. Das Bordinformationssystem weist eine Antenne zum Empfang satellitenbasierter Geopositionsdaten auf, die an einem Gehäuse des Bordinformationssystems angeordnet ist.

Ferner ist aus EP 2 813 864 A2 ein Empfänger für ein Multimoden-Navigationssystem mit einer Basisbandeinheit bekannt. Die Basisbandeinheit ist konfiguriert zum Zuweisen von Ressourcen zu Positionierungssatelliten.

Daher ist es eine Aufgabe der vorliegenden Anmeldung, eine verbesserte On-Board-Unit mit einer zuverlässigeren Positionsermittlung mithilfe von GNSS-Signalen zu schaffen.

Diese Aufgabe wird durch On-Board-Unit für ein Kraftfahrzeug gemäß Anspruch 1 gelöst. Ausgestaltungen und Weiterbildungen des Erfindungsgedankens sind Gegenstand von abhängigen Ansprüchen.

Es werden eine On-Board-Unit für ein Kraftfahrzeug und eine Einbauanordnung zum Einbau in ein Kraftfahrzeug mit einer On-Board-Unit offenbart.

Die On-Board-Unit für ein Kraftfahrzeug mit einer GNSS-Antenne und einer GNSS-Empfangsvorrichtung zur Ermittlung der Position des Kraftfahrzeugs, wobei die Antenne und die Empfangsvorrichtung innerhalb eines Gehäuses der On-Board-Unit angeordnet sind, zeichnet sich unter anderem dadurch aus, dass die GNSS-Antenne eine linear polarisierte Antenne ist und für den Empfang von GNSS-Signalen aus mehreren GNS-Systemen geeignet ist, und, dass die Empfangsvorrichtung derart gestaltet ist, dass sie GNSS-Signale aus mehreren verschiedenen GNS-Systemen empfangen kann und in Abhängigkeit von der Verfügbarkeit von empfangenen GNSS-Signalen und/oder der Signalgüte von empfangenen GNSS-Signalen entscheidet, welche der empfangenen GNSS-Signale zur Bestimmung der Position verwendet werden sollen.

Durch die hier vorgeschlagene Verwendung einer linear polarisierten GNSS-Antenne wird besonders vorteilhaft ermöglicht, auch reflektierte GNSS-Signale zu empfangen und zur Positionsermittlung heran zu ziehen, die mit zirkular polarisierten Antennen nicht empfangen werden können.

Durch die hier vorgeschlagene Verwendung von GNSS-Signalen aus mehreren verschieden GNS-Systemen wird besonders vorteilhaft ermöglicht, auch dann eine Positionsermittlung durchzuführen, wenn von nur einem einzelnen GNS-System nicht genügend viele GNSS-Signale empfangen werden können oder wenn die aus einem einzelnen GNS-System empfangenen GNSS-Signale zumindest teilweise nicht für eine Positionsermittlung ausreichende Signalgüte oder Verfügbarkeit aufweisen. Auch wenn in einer gegebenen Situation genügend GNSS-Signale aus einem einzelnen GNS-System empfangen werden können, ermöglicht die hier vorgeschlagene Verwendung von GNSS-Signalen aus mehreren verschiedenen GNS-Systemen eine verbesserte Positionsermittlung gegenüber einer Positionsermittlung basierend auf nur einem einzelnen GNS-System. Es kann also die GNSS-Empfangsvorrichtung einer hier vorgeschlagenen On-Board-Unit zeitgleich GNSS-Signale aus mehreren verschiedenen GNS-Systemen zur Positionsermittlung heranziehen. Sozusagen können also in einem gemischten Betrieb GNSS-Signale aus mehreren verschiedenen GNS-Systemen gemischt zur Positionsermittlung herangezogen werden.

Durch die hier vorgeschlagene Unterbringung von einer GNSS-Antenne in einem Gehäuse einer On-Board-Unit kann besonders vorteilhaft ermöglicht werden, dass keine externe Antenne benötigt wird. Infolgedessen wird zudem besonders vorteilhaft ermöglicht, Installationsaufwand, Anschlusskabel und ggf. weitere Vorrichtungen der Antennentechnik, beispielsweise einen Splitter, einzusparen.

Zusammengenommen ermöglicht die hier vorgeschlagene Anordnung einer linear polarisierten GNSS-Antenne, welche zum Empfang von Signalen aus mehreren GNS-Systemen geeignet ist, zusammen mit einer Empfangsvorrichtung, welche zum Empfang von Signalen aus mehreren GNS-Systemen geeignet ist, in einem Gehäuse einer On-Board-Unit für ein Kraftfahrzeug besonders vorteilhaft, eine verbesserte On-Board-Unit für ein Kraftfahrzeug, welche mithilfe von GNSS-Signalen aus zumindest zwei GNS-Systemen eine verbesserte Positionsermittlung ausführen kann, zu schaffen. Weil die GNSS-Antenne und die GNSS-Empfangsvorrichtung der hier vorgeschlagenen On-Board-Unit dazu in der Lage sind, GNSS-Signale von mehreren verschiedenen GNS-Systemen zu empfangen und zu verarbeiten, reicht die Verwendung von nur einer einzigen GNSS-Antenne aus, um zuverlässige Positionsermittlung des mit der On-Board-Unit ausgerüsteten Fahrzeugs zu ermöglichen.

Als Ausgestaltungsformen kommen für die hier vorgeschlagenen On-Board-Units alle Arten von On-Board-Units für Kraftfahrzeuge wie etwa Tachographen - insbesondere digitale Tachographen - Mautgeräte, Taxameter, sogenannte Universal On-Board-Units, die die Funktionen von Tachographen und Mauterfassungsgeräten kombinieren, oder jegliche Arten von Fahrzeugdatenaufzeichnungsvorrichtungen, also auch GNSS-Aufzeichnungsgeräte wie GNSS-Logger (d.h. Datenlogger für GNSS-Daten) oder sogenannte GNSS-Tracker (so genannt nach "Track" - aus dem Englischen etwa als Wegstrecke zu übersetzen - der aufgezeichneten Liste von GNSS-Koordinaten), oder von jeglichen Telematik-Geräten), beispielsweise eHorizon-Geräte oder Navigationsgeräte, mit GNSS-Empfang in Frage. Darunter sind digitale Tachographen besonders hervorzuheben, weil die hier vorgeschlagene On-Board-Unit in besonderem Maße für eine Ausführung als Tachographen gedacht ist.

Durch die Anordnung der GNSS-Antennen der On-Board-Unit in einem Gehäuse der On-Board-Unit wird besonders vorteilhaft eine kompakte Anordnung der On-Board-Unit mit verbesserten Empfangseigenschaften erzielt.

Eine hier vorgeschlagene On-Board-Unit kann zeitgleich und/oder zeitlich versetzt und/oder zeitlich überlappend zumindest zwei verschiedene GNSS-Signale aus zumindest zwei verschiedenen GNS-Systemen empfangen.

Eine hier vorgeschlagene Empfangsvorrichtung ist als elektronische Vorrichtung gestaltet, welche die zur Positionsermittlung anhand von GNSS-Signalen notwendigen Empfangsverfahren und Verarbeitungsverfahren beherrscht. Beispielhaft für notwendige Empfangsverfahren seien Codemultiplexverfahren (auch CDMA vom englischen Ausdruck Code-Division Multiple Access) und Frequenzmultiplexverfahren (auch FDMA vom englischen Ausdruck Frequency-Division Multiple Access) genannt, ohne die Empfangsvorrichtung darauf zu beschränken. Eine Empfangsvorrichtung weist zumindest eine Leiterplatte auf.

Im Zusammenhang mit der vorliegenden Anmeldung sind unter einer Leiterplatte auch die gleichbedeutenden Ausdrücke Platine und PCB (Abkürzung des Englischen Begriffs "Printed Circuit Board") zu verstehen und umgekehrt. Eine hier vorgeschlagene GNSS-Antenne, die als Leiterstruktur an und/oder in einer Leiterplatte gestaltet ist, kann auf verschiedene Weisen hergestellt werden. Beispielsweise kann eine derartige Antenne hergestellt werden, indem direkt bei der Herstellung der Leiterplatte eine Leiterstruktur an, d.h. mit einer der Oberflächen der Leiterplatte in Berührung stehend - insbesondere über einen flächigen Kontakt, oder in, d.h. ganz oder Teilweise auf gleicher Höhe mit dem Kernmaterial der Leiterplatte oder ganz oder teilweise umgeben von dem Kernmaterial der Leiterplatte, angeordnet oder geschaffen wird. Dabei kann beispielsweise auch im Zuge der Herstellung der Leiterplatte selbst eine derartige Antenne als Leiterstruktur im Inneren der Leiterplatte realisiert werden. Eine weitere Möglichkeit besteht beispielsweise darin, im Laufe des Herstellungsprozesses der Leiterplatte eine Leiterstruktur auf eine Oberfläche der Leiterplatte aufzubringen. Eine dritte Möglichkeit zur Herstellung einer GNSS-Antenne als Leiterstruktur an und/oder in einer Leiterplatte besteht beispielsweise darin, nach der Herstellung der Leiterplatte in einem separaten Prozess eine Leiterstruktur an oder auf eine Leiterplatte oder durch eine Leiterplatte hindurchragend anzubringen, indem beispielsweise die Leiterstruktur aufgedruckt wird.

Eine hier vorgeschlagene On-Board-Unit hat eine in Einbaulage, d.h. wenn die On-Board-Unit in einem Kraftfahrzeug eingebaut ist, dem Fahrzeuginnenraum und/oder den Insassen des Fahrzeugs zugewandte Seite, welche auch als Front bezeichnet wird. Diese Front kann beispielsweise Eingabevorrichtungen und/oder Ausgabevorrichtungen zur Interaktion mit den Insassen aufweisen und Bestandteil eines Gehäuses der On-Board-Unit sein. Eine hier vorgeschlagene On-Board-Unit kann beispielsweise so in ein Kraftfahrzeug eingebaut sein, dass in Einbaulage die Front senkrecht ausgerichtet oder von einer senkrechten Ausrichtung leicht abweichend ausgerichtet ist. Eine von einer senkrechten Ausrichtung leicht abweichende Einbaulage kann beispielsweise mit der Oberkante leicht vom Fahrzeuginnenraum und/oder den Insassen fort geneigt oder leicht zum Fahrzeuginnenraum hin geneigt sein. Als leichte Neigung können Neigungswinkel von bis zu +/- 30 Grad gegenüber der Horizontalen und/oder der Aufstandsfläche des Kraftfahrzeugs gesehen werden.

Eine Front ist so ausgestaltet, dass sie eine Druckerschublade aufweist.

Eine hier vorgeschlagene On-Board-Unit weist zumindest ein Gehäuse auf, welches zumindest Bestandteile der On-Board-Unit beherbergt und auch als Gerätegehäuse bezeichnet werden kann. Im einfachsten Fall kann ein Gehäuse einer On-Board-Unit im Wesentlichen quaderförmig sein. Eine der Quaderflächen ist dann die oben beschriebene Front des Gehäuses. Der Front gegenüber liegt auf die dem Fahrzeuginnenraum und/oder den Insassen des Fahrzeugs abgewandte Seite der On-Board-Unit und/oder des Gehäuses, welche als Rückseite bezeichnet werden kann. Weiterhin besitzt ein solches beispielhaftes Gehäuse eine in Einbaulage unten befindliche Seite, welche sozusagen auf der der Straße und/oder dem Untergrund, auf der bzw. auf dem sich das Fahrzeug befindet, in dem die On-Board-Unit eingebaut ist, zugewandt ist. Diese Seite kann als Unterseite des Gehäuses und/oder als Unterseite der On-Board-Unit bezeichnet werden. Der Unterseite gegenüber liegt, der Straße und/oder dem Untergrund abgewandt, die Oberseite des Gehäuses und/oder der On-Board-Unit. Diese Seite ist in Einbaulage im Wesentlichen dem Himmel zugewandt. Weiterhin gibt es zwei weitere Flächen am Quader, welche als Seitenflächen bezeichnet werden. Wie die Front und die Rückseite sind diese Flächen in diesem Beispiel im Wesentlichen senkrecht ausgerichtet. Von der Perspektive eines Fahrzeuginsassen bzw. vom Fahrzeuginnenraum her von außen auf die Front der On-Board-Unit blickend befindet sich die linke Seitenwand des Gehäuses und/oder der On-Board-Unit auf der linken Seite. Die rechte Seitenwand befindet sich analog auf der rechten Seite.

Die hier vorgeschlagene On-Board-Unit weist eine Empfangsvorrichtung mit einer in Einbaulage horizontal im Gehäuse angeordneten Leiterplatte und eine in Einbaulage oberhalb der Leiterplatte der Empfangsvorrichtung angeordnete Druckerschublade auf. Das ist so zu verstehen, dass sich die Leiterplatte in Einbaulage parallel zur Unterseite des Gehäuses befindet, wenn dieses beispielsweise einen im Wesentlichen quaderförmigen Aufbau aufweist. Es bedeutet auch, dass die Leiterplatte im Wesentlichen parallel zur Straße und/oder zum Untergrund unter dem Fahrzeug ausgerichtet ist, in das die On-Board-Unit eingebaut ist. Die Leiterplatte ist also 30 Grad oder weniger gegenüber der Straße und/oder dem Untergrund unter dem Fahrzeug geneigt. Auf der der Straße und/oder dem Untergrund unter dem Fahrzeug abgewandten Seite der Leiterplatte befindet sich in Einbaulage eine Druckerschublade der On-Board-Unit. Diese Druckerschublade ist also auf der dem Himmel zugewandten Seite der On-Board-Unit angeordnet. Die GNSS-Antenne ist außerdem derart an und/oder in der Leiterplatte angeordnet, dass sie sich in Einbaulage hinter und/oder unter der Druckerschublade befindet. In anderen Worten kann sich die GNSS-Antenne also beispielsweise insofern zwischen der Druckerschublade und der Leiterplatte befinden, dass sie dennoch mit der Leiterplatte verbunden ist. In einem anderen, ähnlichen, mit Ausnahme der Anordnung der GNSS-Antenne identischen Ausführungsbeispiel ist die GNSS-Antenne so auf der Leiterplatte angeordnet, dass sie hinter der Druckerschublade angeordnet ist, d.h. weiter von der Front entfernt ist als der der Front fernste Punkt der Druckerschublade. In einem anderen, ähnlichen, mit Ausnahme der Anordnung der GNSS-Antenne identischen Ausführungsbeispiel ist die GNSS-Antenne so auf der Leiterplatte angeordnet, dass sie sich in exakt horizontaler Einbaulage der Leiterplatte exakt unter dem der Front fernste Punkt der Druckerschublade befindet. Ist eine derartige Variante der hier vorgeschlagenen On-Board-Unit in Einbaulage gegenüber der horizontalen Lage leicht geneigt, beispielweise 1 bis 30 Grad, so befindet sich die Antenne von einer exakt horizontalen Betrachtung aus zwar weiterhin zwischen der Druckerschublade und der Leiterplatte, sie kann unter Umständen aber auch vom Blickwinkel eines Fahrzeuginsassen aus der Front ferner sein als der der Front fernste Punkt der Druckerschublade, wenn die On-Board-Unit in Einbaulage so gegenüber der horizontalen Lage geneigt ist, dass die Rückseite der Straße und/oder dem Untergrund unter dem Fahrzeug ferner ist als die Front.

Unter dem Ausdruck GNSS-Signale abschirmenden Bauteile sind jene Bauteile zu verstehen, welche GNSS-Signale stark abschirmen, beispielsweise mehr als 1 dB oder mehr als 3 dB oder mehr als 10 dB. Insbesondere eine Druckerschublade aus einem Kunststoffwerkstoff oder Druckerpapier sind keine GNSS-Signale stark abschirmenden Bauteile. Metallische Bauteile, insbesondere massive metallische Bauteile, können stark abschirmende Bauteile sein. Bei der Anordnung der Bauteile einer beispielhaften Ausführungsvariante einer hier vorgeschlagenen On-Board-Unit werden alle stark abschirmenden Bauteile der On-Board-Unit derart innerhalb des Gehäuses der On-Board-Unit angeordnet, dass in Einbaulage zumindest eine Verbindungslinie zwischen der GNSS-Antenne und dem Himmel frei ist von GNSS-Signale abschirmenden Bauteilen der On-Board-Unit. Dabei sind unterschiedliche Schwellen als Auswahlkriterien denkbar, welche Bauteile als stark abschirmend gesehen werden. Stark abschirmende Bauteile können beispielsweise ein GNSS-Signal um mehr als 1 dB oder mehr als 3 dB oder mehr als 10 dB abschwächen.

Eine beispielhafte GNSS-Empfangsvorrichtung ist so ausgebildet, dass sie anhand von mindestens vier GNSS-Signalen eine Position ermitteln kann, wobei die GNSS-Signale von ausreichend großer Empfangsleistung, d.h. oberhalb der minimalen Empfindlichkeit der Empfangsvorrichtung, sein müssen und auch mehrfach reflektierte GNSS-Signale sein können.

Ein Einbaurahmen einer hier vorgeschlagenen Einbauanordnung kann im Querschnitt ein im Wesentlichen L-förmiges Profil oder ein im Wesentlichen I-förmiges Profil aufweisen.

Eine als digitaler Tachograph ausgebildete On-Board-Unit hat in einer Ausführung eine dem Fahrzeuginnenraum und/oder den Insassen zugewandte Seite, welche als auch als Front bezeichnet wird.

In einer Ausführungsform weist die Front der On-Board-Unit zumindest eine Ausgabevorrichtung, beispielsweise einen Bildschirm oder eine Anzeige, und zumindest eine Eingabevorrichtung auf, welche als ein Bedienelement, z.B. eine oder mehrere Tasten, ausgeführt ist.

In einer besonders vorteilhaften Ausführungsform einer hier vorgeschlagenen On-Board-Unit ist die GNSS-Antenne als eine Leiterstruktur an und/oder in einer Leiterplatte gestaltet. Eine derartige Antenne ist vorteilhafterweise besonders kostengünstig und zugleich mit hoher Präzision herstellbar. Aus der hohen Herstellungspräzision ergibt sich wiederum besonders vorteilhaft eine hohe Qualität einer derartigen Antenne.

Bei einer weiteren besonders vorteilhaften Ausführungsform einer hier vorgeschlagenen On-Board-Unit ist die GNSS-Antenne als eine Leiterstruktur an und/oder in einer zu einer Leiterplatte der Empfangsvorrichtung separaten Leiterplatte gestaltet. Dadurch wird besonders vorteilhaft ermöglicht, die Antenne auf der separaten Leiterplatte vom Herstellungsprozess der Leiterplatte der Empfangsvorrichtung getrennt herzustellen und beispielsweise hernach die Leiterplatte der Empfangsvorrichtung mit der separaten Leiterplatte der Antenne zu bestücken. Dadurch können beispielsweise besonders vorteilhaft Produktionskosten gesenkt und die Handhabung von Antenne und anderen Bauteilen, mit denen die Leiterplatte der Empfangsvorrichtung bestückt wird, kann vereinheitlicht werden. Auch kann die Montage der Antenne dadurch vereinfacht werden.

Bei einer besonders vorteilhaften Ausführungsform einer hier vorgeschlagenen On-Board-Unit ist die GNSS-Antenne als eine Leiterstruktur an und/oder in einer zu einer Leiterplatte der Empfangsvorrichtung separaten Leiterplatte gestaltet, an und/oder in der sich ansonsten keine weiteren elektronischen Bauteile befinden. Dadurch wird besonders vorteilhaft ermöglicht, das Herstellungsverfahren für die Antenne auf Verfahrensmöglichkeiten zu erweitern, deren Ausführung zu einer Beschädigung elektronischer Bauteile führen kann. Dadurch können wiederum beispielsweise besonders vorteilhaft Produktionskosten gesenkt werden.

In einer weiteren besonders vorteilhaften Ausführungsform einer hier vorgeschlagenen On-Board-Unit ist die GNSS-Antenne planar gestaltet. Durch eine planare Gestaltung, z.B. als eine Leiterstruktur an und/oder in einer Leiterplatte, werden besonders vorteilhaft kompakte Abmessungen der Antenne ermöglicht.

Bei einer besonders vorteilhaften Ausführungsform einer hier vorgeschlagenen On-Board-Unit sind die GNSS-Antenne und GNSS-Signale abschirmenden Bauteile der On-Board-Unit derart innerhalb des Gehäuses der On-Board-Unit angeordnet, dass in Einbaulage zumindest eine Verbindungslinie zwischen der GNSS-Antenne und dem Himmel von GNSS-Signale abschirmenden Bauteilen der On-Board-Unit frei ist. Ein Vorteil einer derartigen Gestaltung liegt in einem verbesserten Empfang von GNSS-Signalen.

Eine besonders vorteilhafte Ausführungsform einer hier vorgeschlagenen On-Board-Unit weist genau ein Gehäuse auf. In diesem einen Gehäuse befinden sich auch die GNSS-Antenne und die GNSS-Empfangsvorrichtung. Die Verwendung von nur einem Gehäuse ermöglicht, derartige On-Board-Units besonders ökonomisch herzustellen.

Die hier vorgeschlagene On-Board-Unit weist eine Empfangsvorrichtung mit einer in Einbaulage im Wesentlichen horizontal im Gehäuse angeordneten Leiterplatte und eine in Einbaulage oberhalb der Leiterplatte der Empfangsvorrichtung angeordnete Druckerschublade auf. Dabei ist die GNSS-Antenne derart an und/oder in der Leiterplatte angeordnet, dass sie sich in Einbaulage hinter und/oder unter der Druckerschublade befindet. Eine derartige Ausführungsform ermöglicht besonders vorteilhaft einen verbesserten Empfang von GNSS-Signalen und/oder eine raumsparende Anordnung der Bestandteile der On-Board-Unit im Gehäuse.

Bei einer besonders vorteilhaften Ausführungsform einer hier vorgeschlagenen On-Board-Unit ist die GNSS-Antenne so angeordnet, dass sie von der Front der On-Board-Unit fortweisend ausgerichtet ist. Hierdurch wird besonders vorteilhaft eine verbesserte GNSS-Empfangscharakteristik der On-Board-Unit ermöglicht, wodurch wiederum ein verbesserter Empfang von GNSS-Signalen ermöglicht wird.

In einer weiteren besonders vorteilhaften Ausführungsform ist eine hier vorgeschlagene On-Board-Unit ein Tachograph und/oder ein Mautgerät. Dadurch ergibt sich der besondere Vorteil, den verbesserten GNSS-Empfang der hier vorgeschlagenen On-Board-Unit für eine für Tachographen und/oder Mautgeräte charakteristische Datenerfassung heranzuziehen.

Bei einer besonders vorteilhaften Ausführungsform einer hier vorgeschlagenen Einbauanordnung zum Einbau in ein Kraftfahrzeug mit einer On-Board-Unit und einem Einbaurahmen, welcher die On-Board-Unit umgreift, ist die GNSS-Antenne derart auf der den Fahrzeuginsassen und/oder dem Fahrzeuginnenraum zugewandten Seite oder Hälfte der On-Board-Unit angeordnet, dass sie sich innerhalb des vom Einbaurahmen umgriffenen Bereichs der On-Board-Unit befindet. Dadurch wird besonders vorteilhaft ermöglicht, eine Abstimmung der Charakteristika von On-Board-Unit und Einbaurahmen so vorzunehmen, dass dadurch ein verbesserter GNSS-Empfang erreicht wird. Es wird weiterhin auch ohne eine derartige Abstimmung besonders vorteilhaft ermöglicht, einen aus der Kombination von Einbaurahmen und On-Board-Unit resultierenden, verbesserten GNSS-Empfang zu erhalten.

Bei einer besonders vorteilhaften Ausführungsform einer hier vorgeschlagenen Einbauanordnung zum Einbau in ein Kraftfahrzeug mit einer On-Board-Unit und einem Einbaurahmen, welcher die On-Board-Unit umgreift, ist die GNSS-Antenne derart auf der den Fahrzeuginsassen und/oder dem Fahrzeuginnenraum zugewandten Seite oder Hälfte der On-Board-Unit angeordnet, dass sie sich innerhalb des vom Einbaurahmen umgriffenen Bereichs der On-Board-Unit befindet, und der Einbaurahmen besteht im Wesentlichen aus einem Kunststoff-Material. Dies ermöglicht, die Gegebenheiten der Umgebung der On-Board-Unit im Fahrzeug, insbesondere in Hinsicht auf geometrische Gegebenheiten und Gegebenheiten betreffend den Empfang von GNSS-Signalen, so zu berücksichtigen, dass ein verbesserter GNSS-Empfang erreicht wird. Ein Einbaurahmen aus einem Kunststoff-Material kann, je nach Anordnung und weiterer Geräte- sowie Fahrzeugbesonderheiten, zu einem besseren Empfangsergebnis von GNSS-Signalen führen.

Bei einer besonders vorteilhaften Ausführungsform einer hier vorgeschlagenen Einbauanordnung zum Einbau in ein Kraftfahrzeug mit einer On-Board-Unit und einem Einbaurahmen, welcher die On-Board-Unit umgreift, ist die GNSS-Antenne derart auf der den Fahrzeuginsassen und/oder dem Fahrzeuginnenraum zugewandten Seite oder Hälfte der On-Board-Unit angeordnet, dass sie sich innerhalb des vom Einbaurahmen umgriffenen Bereichs der On-Board-Unit befindet, und der Einbaurahmen besteht im Wesentlichen aus einem metallischen Material. Dies ermöglicht, die Gegebenheiten der Umgebung der On-Board-Unit im Fahrzeug, insbesondere in Hinsicht auf geometrische Gegebenheiten und Gegebenheiten betreffend den Empfang von GNSS-Signalen, so zu berücksichtigen, dass ein verbesserter GNSS-Empfang erreicht wird. Ein Einbaurahmen aus einem metallischen Material kann, je nach Anordnung und weiterer Geräte- sowie Fahrzeugbesonderheiten, zu einem besseren Empfangsergebnis von GNSS-Signalen führen.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: eine Seitenansicht einer hier vorgeschlagenen On-Board-Unit für ein Kraftfahrzeug mit einer GNSS-Antenne und einer GNSS-Empfangsvorrichtung zur Ermittlung der Position des Kraftfahrzeugs, wobei die Antenne und die Empfangsvorrichtung innerhalb eines Gehäuses der On-Board-Unit angeordnet sind,
- Figur 2: eine Seitenansicht eines Ausführungsbeispiels einer On-Board-Unit für ein Kraftfahrzeug, bei der Lage und Orientierung eines Öffnungskegels, innerhalb dessen direkte Verbindungslinien zwischen Antenne und Himmel liegen können, angedeutet sind,
- Figur 3: eine Frontalansicht eines Ausführungsbeispiels einer erfindungsgemäßen On-Board-Unit für ein Kraftfahrzeug mit optionalen Eingabe- und Ausgabevorrichtungen und einer Druckerschublade,
- Figur 4: eine Seitenansicht einer beispielhaften Ausführungsform einer erfindungsgemäßen On-Board-Unit für ein Kraftfahrzeug, bei der eine beispielhafte Lage einer Druckerschublade erkennbar ist,
- Figur 5: eine Seitenansicht einer beispielhaften Ausführungsform einer On-Board-Unit für ein Kraftfahrzeug mit einer beispielhaften Andeutung einer Empfangscharakteristik der GNSS-Antenne,
- Figur 6: eine schematische Darstellung der Verwendung einer erfindungsgemäßen On-Board-Unit in einem Kraftfahrzeug zur Ermittlung einer Position des Kraftfahrzeugs,
- Figur 7: eine Seitenansicht einer Einbauanordnung zum Einbau in ein Kraftfahrzeug mit einer On-Board-Unit und einem Einbaurahmen, welcher die On-Board-Unit umgreift.

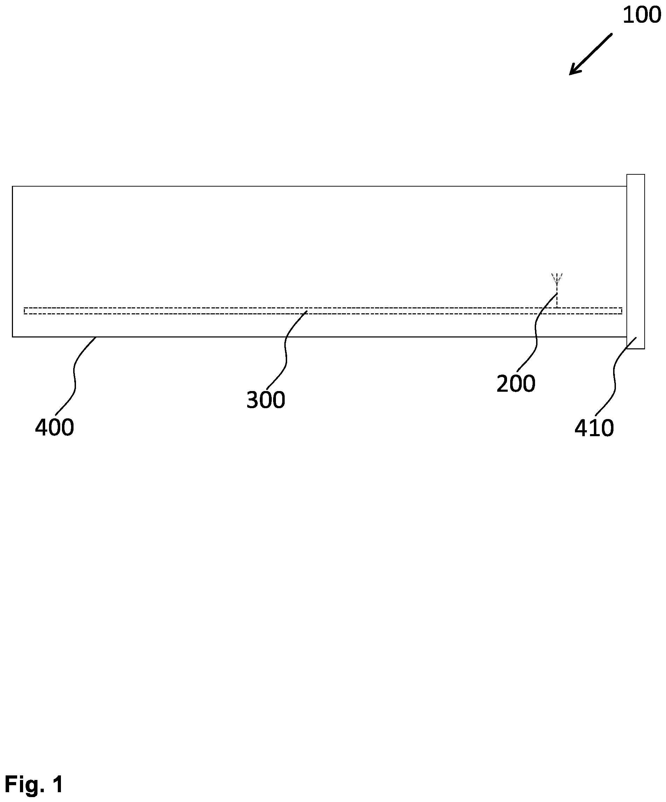

Figur 1 zeigt in einer Seitenansicht eine On-Board-Unit 100 für ein Kraftfahrzeug 2100. Die On-Board-Unit 100 für ein Kraftfahrzeug 2100 weist eine GNSS-Antenne 200 und eine GNSS-Empfangsvorrichtung 300 zur Ermittlung der Position des Kraftfahrzeugs 2100 auf. Dabei sind die Antenne 200 und die Empfangsvorrichtung 300 innerhalb eines Gehäuses 400 der On-Board-Unit 100 angeordnet. Die On-Board-Unit 100 ist dadurch gekennzeichnet, dass die GNSS-Antenne 200 eine linear polarisierte Antenne ist und für den Empfang von GNSS-Signalen aus mehreren GNS-Systemen geeignet ist, und, dass die Empfangsvorrichtung 300 derart gestaltet ist, dass sie GNSS-Signale aus mehreren verschiedenen GNS-Systemen empfangen kann und in Abhängigkeit von der Verfügbarkeit von empfangenen GNSS-Signalen und/oder der Signalgüte von empfangenen GNSS-Signalen entscheidet, welche der empfangenen GNSS-Signale zur Bestimmung der Position des Kraftfahrzeugs 2100 verwendet werden sollen. Es ist außerdem die Front 410 des Gehäuses 400 beziehungsweise der On-Board-Unit 100 gezeigt.

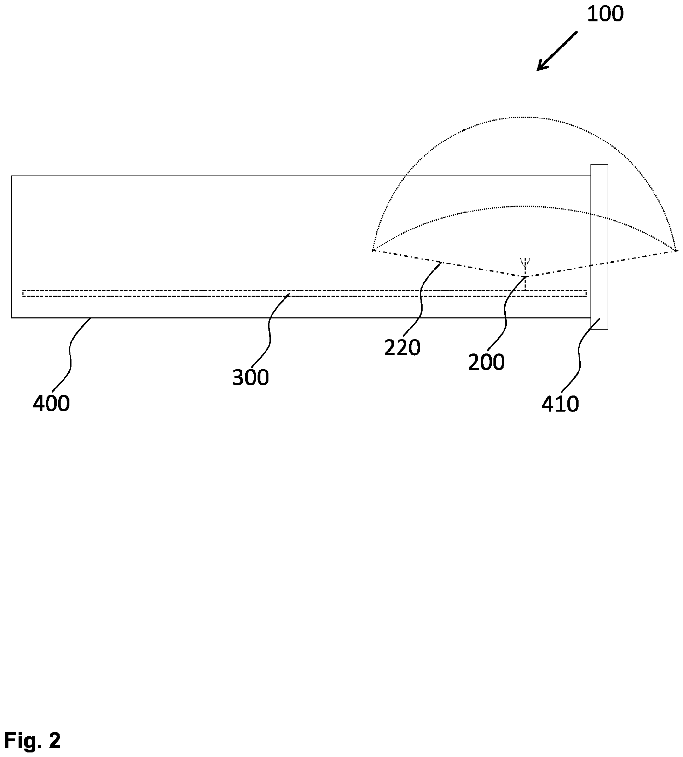

Figur 2 zeigt in einer Seitenansicht eine On-Board-Unit 100 für ein Kraftfahrzeug 2100, bei der Lage und Orientierung eines Öffnungskegels 220, innerhalb dessen direkte Verbindungslinien zwischen Antenne 200 und Himmel liegen können, wenn sich eine hier vorgeschlagene On-Board-Unit 100 in Einbaulage in einem Kraftfahrzeug 2100 befindet, angedeutet sind. Der Öffnungskegel 220 kann prinzipiell bis auf 179, 99 Grad weit geöffnet sein. Jedoch kann er auch kleiner sein, wenn beispielsweise die Einbaulage dazu führt, dass die Leiterplatte der Empfangsvorrichtung 300 gegen eine horizontale Lage leicht geneigt ist. Eine leichte Neigung könnte beispielsweise eine Neigung von bis zu 30 Grad gegenüber einer horizontalen Lage sein. Es sind auch weitere Einschränkungen des Öffnungskegels vorstellbar, beispielsweise durch weitere Einbaugegebenheiten beim Einbau in das Kraftfahrzeug 2100.

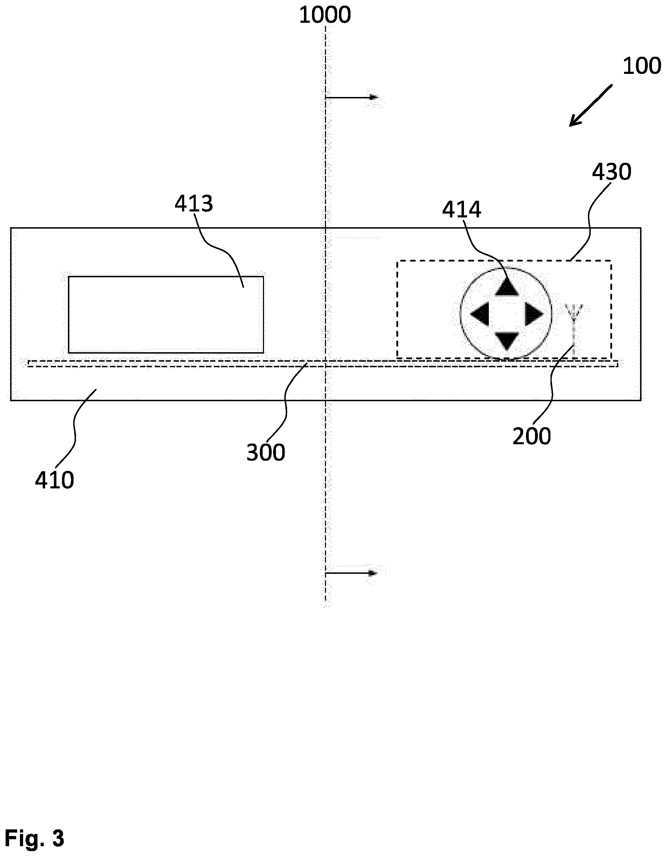

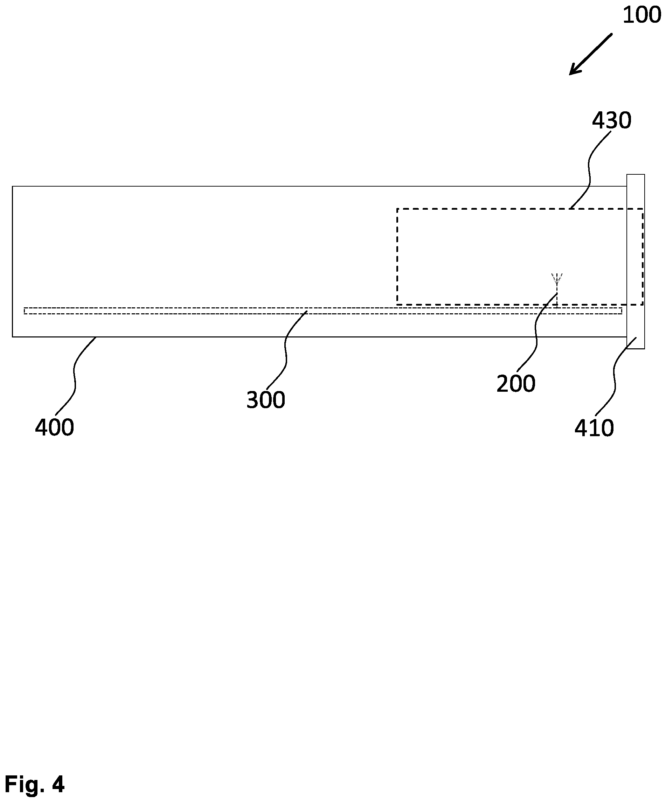

Figur 3 zeigt in einer Frontalansicht ein Ausführungsbeispiel einer erfindungsgemäßen On-Board-Unit 100 für ein Kraftfahrzeug 2100 mit optionalen Eingabe- 414 und Ausgabevorrichtungen 413 und einer Druckerschublade 430. Außerdem ist angedeutet, wie eine gedachte Schnittebene 1000 durch die On-Board-Unit läuft, sodass die in Figuren 1, 2, 4, 5 und 7, insbesondere in Figur 4, gezeigten Seitenansichten aus einer Frontansicht abgeleitet werden.

Figur 4 zeigt in einer Seitenansicht eine beispielhafte Ausführungsform einer On-Board-Unit 100 für ein Kraftfahrzeug 2100 mit einer Druckerschublade 430. In dieser Figur ist eine beispielhafte Lage der Druckerschublade 430 erkennbar. Die Front 410 bildet den den Fahrzeuginsassen und/oder dem Fahrzeuginneren zugewandten Abschluss der On-Board-Unit 100. Die Druckerschublade 430 reicht von der Front 410 bis weit in das Innere der On-Board-Unit 100 und das Innere des Gehäuses der On-Board-Unit 400 hinein, wobei sie sich oberhalb der horizontal und parallel zur Unterseite der On-Board-Unit angeordneten Leiterplatte der Empfangsvorrichtung 300 befindet. Die GNSS-Antenne 200 ist als vertikales Antennensymbol angedeutet, was jedoch keineswegs bedeutet, dass die Antenne 200 so weit oder überhaupt aus der Ebene der Leiterplatte der Empfangsvorrichtung 300 herausragt. Jedoch ist die Antenne 200 an und/oder in der Leiterplatte derart angeordnet, dass sie sich in dem Bereich der Leiterplatte befindet, über den die Druckerschublade ragt.

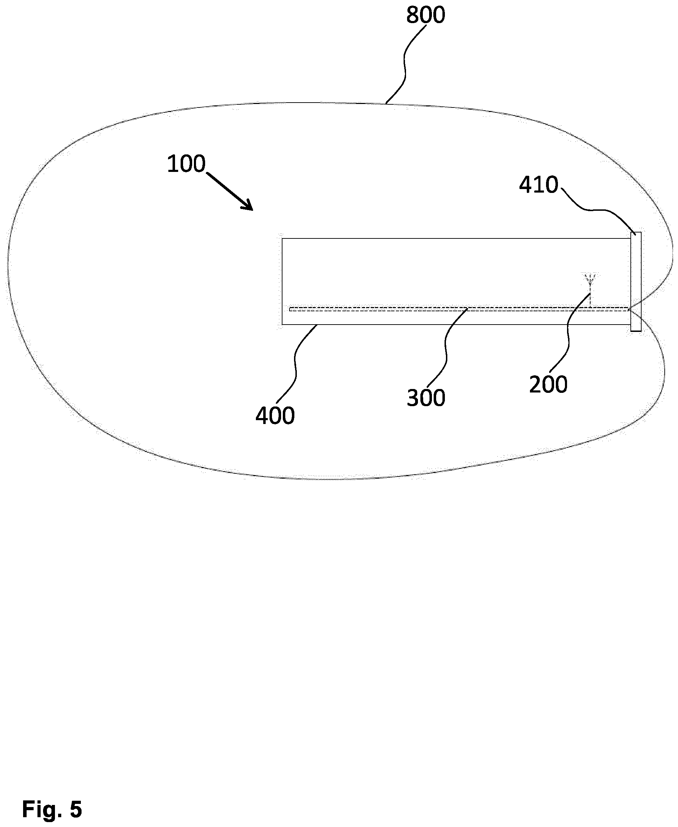

Figur 5 zeigt in einer Seitenansicht eine beispielhafte Ausführungsform einer On-Board-Unit 100 für ein Kraftfahrzeug 2100 mit einer beispielhaften Andeutung einer Empfangscharakteristik 800 der GNSS-Antenne 200. Die dargestellte Empfangscharakteristik 800 kann als Richtcharakteristik verstanden werden. In der Seitenansicht kann die beispielhafte Empfangscharakteristik 800 als eine im Wesentlichen Nierencharakteristik-artige Empfangscharakteristik erkannt werden. Die Einschnürung der Nierencharakteristik befindet sich im Bild auf der rechten Seite. Auf dieser Seite befindet sich auch die Front 410. In dem hier gezeigten Ausführungsbeispiel ist die GNSS-Antenne 200 so angeordnet, dass sie von der Front der On-Board-Unit fortweisend ausgerichtet ist. Das entspricht einer im Wesentlichen horizontalen Ausrichtung der Antenne.

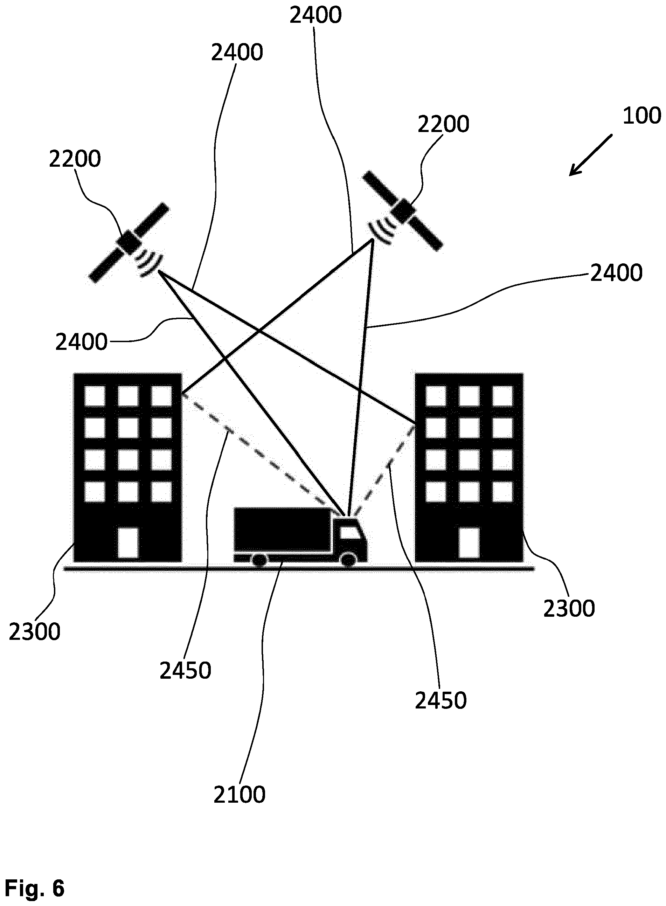

Figur 6 zeigt eine schematische Darstellung der Verwendung einer erfindungsgemäßen On-Board-Unit 100 in einem Kraftfahrzeug 2100 zur Ermittlung einer Position des Kraftfahrzeugs 2100. Die On-Board-Unit 100 befindet sich in dem Kraftfahrzeug 2100, welches sich zwischen GNSS-Signale abschirmenden und/oder reflektierenden Hindernissen 2300 befindet, welche als Häuser angedeutet sind. Die dargestellte beispielhafte Situation entspricht also einem Fahrzeug in einer Häuserschlucht, aber das Prinzip gilt analog in Schluchten, Gebirgen, Wäldern, Tälern und anderen Situationen mit Hindernissen, die den GNSS-Empfang beeinträchtigen. GNSS-Satelliten 2200 senden GNSS-Signale 2400 aus, welche das Fahrzeug 2100 und auch die On-Board-Unit 100 teilweise auch auf direktem Weg erreichen. Teilweise werden GNSS-Signale 2400 an Hindernissen 2300 reflektiert und erreichen das Fahrzeug 2100 und auch die On-Board-Unit 100 als reflektierte GNSS-Signale 2450. Durch das besondere Merkmal der erfindungsgemäßen On-Board-Unit, dass die GNSS-Antenne 200 eine linear polarisierte Antenne ist, kann die On-Board-Unit auch reflektierte GNSS-Signale 2450 empfangen und auch verarbeiten. Dadurch wird besonders vorteilhaft ermöglicht, beispielsweise in Situationen, in denen keine oder keine ausreichend starken oder für eine Positionsbestimmung zu wenige GNSS-Signale auf direktem Weg von einer On-Board-Unit empfangen werden, dass unter Berücksichtigung von reflektierten GNSS-Signalen dennoch eine Positionsermittlung erreicht wird. Eine derartige On-Board-Unit kann auch unter Berücksichtigung von an Bestandteilen des Fahrzeugs oder im Fahrzeug befindlichen Hindernissen einfach oder mehrfach reflektierten GNSS-Signalen eine Position des Kraftfahrzeugs bestimmen.

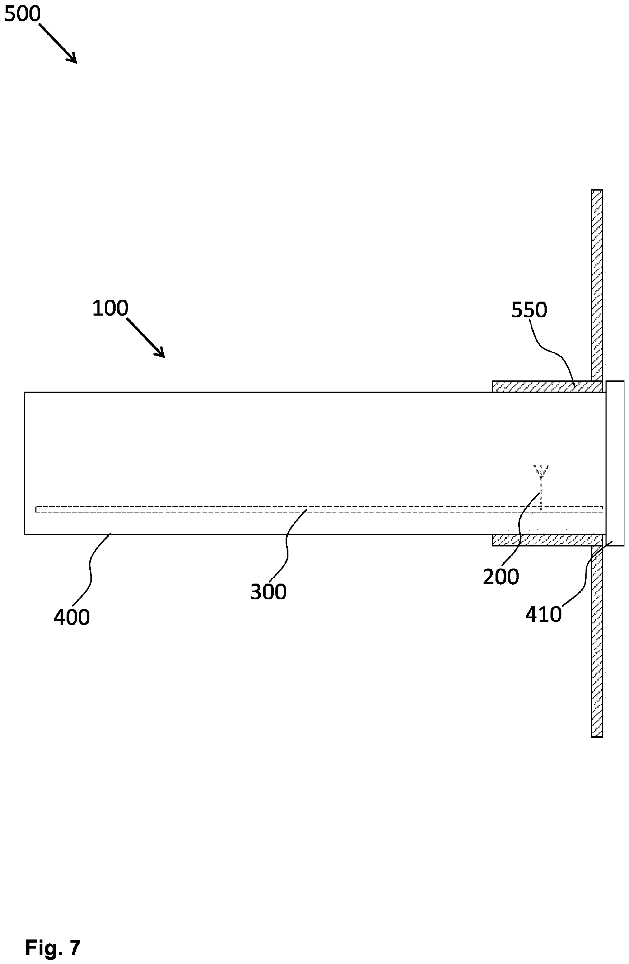

Figur 7 zeigt in einer Seitenansicht eine Einbauanordnung 500 zum Einbau in ein Kraftfahrzeug 2100 mit einer On-Board-Unit 100 und einem Einbaurahmen 550, welcher die On-Board-Unit 100 umgreift. Dabei ist die GNSS-Antenne 200 derart auf der den Fahrzeuginsassen und/oder dem Fahrzeuginnenraum zugewandten Seite oder Hälfte der On-Board-Unit 100 angeordnet, dass sie sich innerhalb des vom Einbaurahmen 550 umgriffenen Bereichs der On-Board-Unit 100 befindet.

## Patentansprüche

1. On-Board-Unit (100) für ein Kraftfahrzeug (2100) mit einer GNSS-Antenne (200) und einer GNSS-Empfangsvorrichtung (300) zur Ermittlung der Position des Kraftfahrzeugs (2100), wobei die GNSS-Antenne (200) und die GNSS-Empfangsvorrichtung (300) innerhalb eines Gehäuses (400) der On-Board-Unit (100) angeordnet sind,
wobei
a. die GNSS-Antenne (200) eine linear polarisierte GNSS-Antenne ist und für den Empfang von GNSS-Signalen aus mehreren GNS-Systemen geeignet ist,
b. wobei die GNSS-Empfangsvorrichtung (300) derart gestaltet ist, dass sie GNSS-Signale aus mehreren verschiedenen GNS-Systemen empfangen kann und in Abhängigkeit von
i. der Verfügbarkeit von empfangenen GNSS-Signalen und/oder der Signalgüte von empfangenen GNSS-Signalen
ii. entscheidet, welche der empfangenen GNSS-Signale zur Bestimmung der Position verwendet werden sollen
und wobei die On-Board-Unit (100) die GNSS-Empfangsvorrichtung (300) mit einer in Einbaulage der On-Board-Unit (100) im Wesentlichen horizontal im Gehäuse angeordneten Leiterplatte und eine in Einbaulage oberhalb der Leiterplatte der GNSS-Empfangsvorrichtung (300) angeordnete Druckerschublade (430) aufweist, wobei die GNSS-Antenne (200) derart an und/oder in der Leiterplatte angeordnet ist, dass sie sich in Einbaulage hinter, d. h. weiter von einer Front (410) der On-Board-Unit (100) entfernt als der der Front (410) fernste Punkt der Druckerschublade (430), und/oder unter der Druckerschublade (430) befindet.

2. On-Board-Unit (100) nach Anspruch 1, wobei die GNSS-Antenne (200) als eine Leiterstruktur an und/oder in einer Leiterplatte gestaltet ist.

3. On-Board-Unit (100) nach Anspruch 2, wobei die GNSS-Antenne (200) als eine Leiterstruktur an und/oder in einer zu einer Leiterplatte der GNSS-Empfangsvorrichtung separaten Leiterplatte gestaltet ist.

4. On-Board-Unit (100) nach Anspruch 3, wobei die GNSS-Antenne (200) als eine Leiterstruktur auf einer separaten Leiterplatte gestaltet ist, an und/oder in der sich ansonsten keine weiteren elektronischen Bauteile befinden.

5. On-Board-Unit (100) nach einem der vorangehenden Ansprüche, wobei die GNSS-Antenne (200) planar gestaltet ist.

6. On-Board-Unit (100) nach einem der vorangehenden Ansprüche, wobei die GNSS-Antenne (200) und GNSS-Signale abschirmenden Bauteile der On-Board-Unit (100) derart innerhalb des Gehäuses (400) der On-Board-Unit (100) angeordnet sind, dass in Einbaulage der On-Board-Unit (100) zumindest eine Verbindungslinie zwischen der GNSS-Antenne (200) und dem Himmel frei ist von GNSS-Signale abschirmenden Bauteilen der On-Board-Unit.

7. On-Board-Unit (100) nach einem der vorangehenden Ansprüche, welche genau ein Gehäuse (400) aufweist.

8. On-Board-Unit (100) nach einem der vorangehenden Ansprüche, wobei die GNSS-Antenne (200) so angeordnet ist, dass sie von der Front (410) der On-Board-Unit (100) fortweisend ausgerichtet ist.

9. On-Board-Unit (100) nach einem der vorangehenden Ansprüche, welche ein Tachograph und/oder ein Mautgerät ist.

10. Einbauanordnung (500) zum Einbau in ein Kraftfahrzeug (2100) mit einer On-Board-Unit (100) nach einem der vorangehenden Ansprüche und einem Einbaurahmen (550), welcher die On-Board-Unit (100) umgreift, wobei die GNSS-Antenne (200) derart auf der den Fahrzeuginsassen und/oder dem Fahrzeuginnenraum zugewandten Seite oder zugewandten Hälfte der On-Board-Unit (100) angeordnet ist, dass sie sich innerhalb des vom Einbaurahmen (550) umgriffenen Bereichs der On-Board-Unit (100) befindet.

11. Einbauanordnung (500) nach Anspruch 10, wobei der Einbaurahmen (550) im Wesentlichen aus einem Kunststoff-Material besteht.

12. Einbauanordnung (500) nach Anspruch 10, wobei der Einbaurahmen (550) im Wesentlichen aus einem metallischen Material besteht.

## Claims

1. Onboard unit (100) for a motor vehicle (2100) having a GNSS antenna (200) and a GNSS receiving apparatus (300) for ascertaining the position of the motor vehicle (2100), wherein the GNSS antenna (200) and the GNSS receiving apparatus (300) are arranged inside a housing (400) of the onboard unit (100), wherein
a. the GNSS antenna (200) is a linearly polarized GNSS antenna and is suitable for receiving GNSS signals from multiple GNS systems,
b. wherein the GNSS receiving apparatus (300) is designed such that it can receive GNSS signals from multiple different GNS systems and takes
i. the availability of received GNSS signals and/or the signal quality of received GNSS signals
ii. as a basis for deciding which of the received GNSS signals are intended to be used for determining the position,
and wherein the onboard unit (100) comprises the GNSS receiving apparatus (300) having a printed circuit board, which is arranged in the housing substantially horizontally in the installed position of the onboard unit (100), and a printer drawer (430), which is arranged above the printed circuit board of the GNSS receiving apparatus (300) in the installed position, wherein the GNSS antenna (200) is arranged on and/or in the printed circuit board such that it is situated behind, i.e. further away from a front (410) of the onboard unit (100) than the point on the printer drawer (430) that is furthest away from the front (410), and/or beneath the printer drawer (430) in the installed position.

2. Onboard unit (100) according to Claim 1, wherein the GNSS antenna (200) is designed as a conductor structure on and/or in a printed circuit board.

3. Onboard unit (100) according to Claim 2, wherein the GNSS antenna (200) is designed as a conductor structure on and/or in a printed circuit board that is separate from a printed circuit board of the GNSS receiving apparatus.

4. Onboard unit (100) according to Claim 3, wherein the GNSS antenna (200) is designed as a conductor structure on a separate printed circuit board on and/or in which there are otherwise no further electronic components.

5. Onboard unit (100) according to one of the preceding claims, wherein the GNSS antenna (200) is of planar design.

6. Onboard unit (100) according to one of the preceding claims, wherein the GNSS antenna (200) and components of the onboard unit (100) that screen GNSS signals are arranged inside the housing (400) of the onboard unit (100) such that in the installed position of the onboard unit (100) at least one connecting line between the GNSS antenna (200) and the sky is free of components of the onboard unit that screen GNSS signals.

7. Onboard unit (100) according to one of the preceding claims, which has precisely one housing (400).

8. Onboard unit (100) according to one of the preceding claims, wherein the GNSS antenna (200) is arranged such that it is oriented so as to point away from the front (410) of the onboard unit (100).

9. Onboard unit (100) according to one of the preceding claims, which is a tachograph and/or a toll device.

10. Installation arrangement (500) for installation in a motor vehicle (2100) having an onboard unit (100) according to one of the preceding claims and a mounting frame (550) that surrounds the onboard unit (100), wherein the GNSS antenna (200) is arranged on that side or half of the onboard unit (100) that faces the vehicle occupants and/or the vehicle interior such that said GNSS antenna is inside the area of the onboard unit (100) that is surrounded by the mounting frame (550) .

11. Installation arrangement (500) according to Claim 10, wherein the mounting frame (550) is made substantially from a plastic material.

12. Installation arrangement (500) according to Claim 10, wherein the mounting frame (550) is made substantially from a metal material.

## Revendications

1. Unité embarquée (100) pour un véhicule automobile (2100) pourvue d'une antenne GNSS (200) et d'un dispositif de réception GNSS (300) permettant de déterminer la position du véhicule automobile (2100), l'antenne GNSS (200) et le dispositif de réception GNSS (300) étant disposés dans un boîtier (400) de l'unité embarquée (100),
dans laquelle
a. l'antenne GNSS (200) est une antenne GNSS polarisée linéairement et est destinée à recevoir des signaux GNSS en provenance de plusieurs systèmes GNS,
b. le dispositif de réception GNSS (300) étant conçu de manière à ce qu'il puisse recevoir des signaux GNSS en provenance de plusieurs systèmes GNS différents et à ce qu'en fonction de
i. la disponibilité de signaux GNSS reçus et/ou de la qualité des signaux GNSS reçus,
ii. il décide lesquels des signaux GNSS reçus doivent être utilisés pour la détermination de la position et
dans laquelle l'unité embarquée (100) comporte le dispositif de réception GNSS (300) pourvu d'une carte de circuit imprimé disposée sensiblement horizontalement dans le boîtier, dans la position d'installation de l'unité embarquée (100), et un tiroir d'imprimante (430) disposé au-dessus de la carte de circuit imprimé du dispositif de réception GNSS (300), dans la position d'installation, l'antenne GNSS (200) étant disposée sur et/ou dans la carte de circuit imprimé de manière à ce que, dans la position d'installation, elle se trouve derrière, c'est-à-dire plus loin d'une face avant (410) de l'unité embarquée (100) que le point du tiroir d'imprimante (430) le plus éloigné de la face avant (410), et/ou sous le tiroir d'imprimante (430).

2. Unité embarquée (100) selon la revendication 1, dans laquelle l'antenne GNSS (200) est conçue sous la forme d'une structure conductrice sur et/ou dans une carte de circuit imprimé.

3. Unité embarquée (100) selon la revendication 2, dans laquelle l'antenne GNSS (200) est conçue sous la forme d'une structure conductrice sur et/ou dans une carte de circuit imprimé séparée d'une carte de circuit imprimé du dispositif de réception GNSS.

4. Unité embarquée (100) selon la revendication 3, dans laquelle l'antenne GNSS (200) est conçue sous la forme d'une structure conductrice sur une carte de circuit imprimé séparée, sur et/ou dans laquelle ne se trouve par ailleurs aucun autre composant électronique.

5. Unité embarquée (100) selon l'une des revendications précédentes, dans laquelle l'antenne GNSS (200) est conçue sous forme planaire.

6. Unité embarquée (100) selon l'une des revendications précédentes, dans laquelle l'antenne GNSS (200) et des composants de blindage vis-à-vis des signaux GNSS de l'unité embarquée (100) sont disposés dans le boîtier (400) de l'unité embarquée (100) de manière à ce que, dans la position d'installation de l'unité embarquée (100), au moins une ligne de connexion entre l'antenne GNSS (200) et l'espace libre soit exempte de composants de blindage vis-à-vis des signaux GNSS de l'unité embarquée.

7. Unité embarquée (100) selon l'une des revendications précédentes, laquelle comporte exactement un boîtier (400).

8. Unité embarquée (100) selon l'une des revendications précédentes, dans laquelle l'antenne GNSS (200) est disposée de manière à être orientée à l'opposé de la face avant (410) de l'unité embarquée (100).

9. Unité embarquée (100) selon l'une des revendications précédentes, laquelle est un tachygraphe et/ou un appareil de péage.

10. Dispositif d'installation (500) permettant d'effectuer une installation dans un véhicule automobile (2100) pourvu d'une unité embarquée (100) selon l'une des revendications précédentes et d'un châssis d'installation (550), lequel entoure l'unité embarquée (100), dans lequel l'antenne GNSS (200) est disposée sur la face ou sur la moitié de l'unité embarquée (100), qui est tournée vers les occupants du véhicule et/ou vers l'intérieur du véhicule, de manière à ce qu'elle se trouve dans la zone de l'unité embarquée (100) qui est entourée par le châssis d'installation (550).

11. Dispositif d'installation (500) selon la revendication 10, dans lequel le châssis d'installation (550) est principalement constitué d'une matière plastique.

12. Dispositif d'installation (500) selon la revendication 10, dans lequel le châssis d'installation (550) est principalement constitué d'un matériau métallique.
